# EUROPEAN PATENT APPLICATION

(11) **EP 2 113 710 A1**
(43) Date of publication of application: **04.11.2009**
(21) Application number: 08711590.3
(22) Date of filing: 19.02.2008
(51) Int. Cl.: F17C 1/08, F17C 11/00, B23K 11/00, B23K 26/20, F16J 12/00

(54) **METHOD OF MANUFACTURING PRESSURE VESSEL**

(30) Priority: 22.02.2007 JP 2007041749
(71) Applicant: The Japan Steel Works, Ltd., Tokyo 141-0032 (JP)
(72) Inventor: KAWAHARAZAKI, Yoshinori, Muroran-shi Hokkaido (JP); IWAMOTO, Takashi, Muroran-shi Hokkaido (JP); NOIE, Kazuo, Muroran-shi Hokkaido (JP)
(74) Representative: Grünecker, Kinkeldey, Stockmair & Schwanhäusser Anwaltssozietät
(86) International application number: PCT/JP2008/052769
(87) International publication number: WO 2008/102779

(57) **Abstract**

Rib plates 2 are provided in an interior of a box-shaped pressure vessel (a vessel main body 1), and the rib plates 2 are joined to inner surfaces of walls of the pressure vessel in such a state that the rib plates are kept erected by welding being applied to the walls of the pressure vessel from the outside thereof. As the welding method, resistance welding involving less thermal effect or laser beam welding is desired. Even in the miniaturized thin pressure vessel, the pressure resisting strength of the pressure vessel can be increased by the rib plates being fixedly provided in the interior thereof, and also in the case of the pressure vessel being used as a hydrogen absorbing alloy vessel, a superior strength is exhibited against an alloy expansion. Since the fabrication of the vessel becomes simple, mass production becomes possible. The internal volume of the vessel can be increased by making the thickness of the vessel thinner and optimizing the shape of the ribs, thereby making it possible to increase the volume efficiency as the hydrogen storage vessel.

## Description

### Technical Field

The present invention relates to a method for fabricating a rectangular pressure vessel that is well suitable for use for a hydrogen absorbing alloy vessel, which accommodates a hydrogen absorbing alloy, and which requires a pressure resisting strength.

### Background Art

Thin rectangular vessels, which are generally seen in many places, are used as vessels for Li-ion batteries for portable electronic product. A deep drawing process is used as a fabricating method for thin vessels which can be mass produced. However, in hydrogen storage vessels used for micro fuel cells, a pressure resisting strength is required for withstanding alloy expansion of a hydrogen absorbing alloy stored therein. In particular, demands for miniaturized and lighter batteries require thin vessels whose thickness is 1 mm or smaller, and demands for vessel strength are getting severer.
In rectangular vessels, it is a known technique that ribs are provided in order to increase internal pressure strength thereof (for example, refer to Patent Literature 1). However, the ribs cannot be provided by the use of the aforesaid deep drawing process.
As general rib joining processes, in the case of large vessels, there are methods in which ribs are joined from inside by welding or brazing. In addition, as fabricating methods for small vessels, there are fabricating methods in which inner ribs are fabricated integrally with vessels by precision casting such as lost wax process, die casting process, MIM and the like or injection molding.
Patent Literature 1: JP-A-9-42595

### Disclosure of the Invention

### Problem that the Invention is to Solve

However, in the case of a small vessel, the method for welding ribs to the vessel from inside involves difficult work. Further, since the thickness of the vessel is thin, there is a problem that the vessel is largely affected by heat and is eventually deformed when the vessel is subjected to welding or blazing. In addition, with the precision casting and injection molding, there is a problem that the fabrication of thin and small vessels whose thickness is 1 mm or smaller becomes difficult.

The invention has been made with a view to solving the problems, and an object thereof is to provide a pressure vessel fabricating method which enables the fabrication of a thin and small pressure vessel by enabling the joining of ribs to the vessel through resistance welding (which includes condenser welding) which can reduce thermal effects by welding or laser beam welding which is applied to the vessel from the outside thereof.

### Means for Solving the Problem

That is, a pressure vessel fabricating method of the invention is **characterized in that** rib plates are provided in an interior of a box-shaped pressure vessel and the rib plates are joined to an inner surface of a wall of the pressure vessel in such a state that the rib plates are kept erected through welding to the wall of the pressure vessel from an outside of the wall of the pressure vessel.

In addition, the pressure vessel fabricating method of the invention is **characterized in that** the rib plates are provided in such a manner as to extend between inner surfaces of walls of the pressure vessel that are opposed to each other, and both ends of the rib plates are respectively welded to the inner surfaces of the walls.

Further, the pressure vessel fabricating method of the invention is **characterized in that** the rib plates include communication cut-outs that are communicated with both sides of the rib plates.

Further, the pressure vessel fabricating method of the invention is **characterized in that** a part or all of the rib plates include connecting plates that extend between adjacent rib plates so as to fix the adjacent rib plates to each other.

Additionally, the pressure vessel fabricating method of the invention is **characterized in that** the welding is resistance welding or laser beam welding.

Further, the pressure vessel fabricating method of the invention is **characterized in that** the pressure vessel is a hydrogen absorbing alloy vessel that stores a hydrogen absorbing alloy.

Further, the pressure vessel fabricating method of the invention is **characterized in that** the rib plates are provided to extend in a plate-length direction with leaving spaces from the pressure vessel by being not to extend along a full length of the pressure vessel.

According to the invention, the rib plates can be joined to the surfaces of the inner walls of the pressure vessel by the welding applied from the outside thereof, thereby making it possible to facilitate the joining work even in a small pressure vessel. Although there is imposed no particular limitation on the shape of the pressure vessel, as long as the pressure vessel has a box shape, the pressure vessel normally has a substantially rectangular shape, and in particular, a flat box shape is preferred. Although the pressure vessel can be formed by the deep drawing process which facilitates mass production, the invention is not limited to any specific forming process, and consequently, a fabricating method may be adopted in which a pressure vessel is formed by welding together sheet materials. In addition, as the welding applied from the outside, resistance welding (which includes condenser welding) or laser beam welding is desirable. With the resistance welding and laser beam welding, thermal effects by welding can be made small, and consequently, rib plates can properly be welded even to a thin pressure vessel without any accompanied deformation.

Incidentally, the resistance welding is a technique in which metals are joined together by causing an electric current to flow to the metals that are to be joined together while applying a constant pressure thereto and making use of mainly contact resistance heat generated between the materials that are to be welded together. Consequently, a brazing material or a welding rod becomes unnecessary. In addition, since the welding is implemented using a voltage of several volts, there is no case where a working person is endangered. Additionally, since there is produced almost no heat, smoke and light, a highly clean working environment is maintained. In addition, compared with other joining processes, this resistance welding is recognized as an effective process for many power saving automation devices from the viewpoints of stable quality, superiority in cost performance and easy operation and maintenance.
In addition, a condenser welding which is included in the aforesaid resistance welding is a technique in which energy (the quantity of electricity) required for welding is charged in an electrolytic condenser and the electric energy so charged is discharged to a welding transformer momentarily to supply a large welding current. Since the energy charged in the electrolytic condenser is discharged momentarily, a large current can be obtained within a short period of time, whereby welding becomes possible which is accompanied by little thermal effect.
In laser beam welding such as using YAG laser beam, since laser is irradiated concentratedly to a small spot, heat can be prevented from being diffused, and penetration is transmitted in a vertical direction. Consequently, distortion and scorching are reduced, and welding with deep penetration becomes possible.

The rib plates are provided in such a manner as to extend between the opposing inner surfaces of the walls of the pressure vessel and are then joined thereto, whereby the pressure resisting strength of the pressure vessel can be increased. Incidentally, there is imposed no specific limitation on the number of rib plates. For example, by providing a plurality of rib plates at substantially equal intervals, the pressure resisting strength of the pressure vessel can be increased uniformly.
In addition, the rib plates desirably have the communication cut-outs which are provided in such a manner as to open to both the sides of the rib plates for communication therethrough so as to obtain proper ventilation in the case of a hydrogen absorbing alloy is stored in the pressure vessel. Although there is imposed no specific limitation on the shape of cut-outs so provided, the communication cut-outs are desirably provided so as to have a sufficient communication area while attempting not to disturb the strength increasing effect as much as possible. Incidentally, a plurality of communication cut-outs are desirably provided in the rib plate at equal intervals in the longitudinal direction thereof by internal cutting-out or external cutting-out.

Additionally, when the rib plates are welded to the inner surfaces of the pressure vessel from the outside thereof, better joining is implemented by the rib plates being closely attached to the inner surfaces of the vessel. Because of this, in welding the rib plates, normally, a pressure is applied from the outside towards the inside of the pressure vessel. Thus, the rib plates need to have a strength (a thickness) which can withstand the pressure so applied, and for example, a thickness of an order of 1 mm becomes necessary. However, if the thickness becomes too large, the internal volume of the pressure vessel is decreased to such an extent that the thickness is increased. In this case, if the pressure vessel is used for a hydrogen storage vessel, a filling ratio of hydrogen is decreased. Therefore, to cope with this, the communication cut-outs which open to both the sides of the rib plates for communication therethrough are provided so as to increase the internal volume of the pressure vessel. Incidentally, the plurality of communication cut-outs are desirably provided in the rib plate at equal intervals in the longitudinal direction thereof through internal cutting-out or external cutting-out. Incidentally, the strength of the rib plate needs to withstand sufficiently the expansion of the hydrogen absorbing vessel. In order to prevent the collapse of the rib plates due to the pressure applied to the pressure vessel, the connecting plates may be provided between the adjacent rib plates. Although there is imposed no specific limitation on the position where to provide the connecting plates, for example, by end portions of the adjacent rib plates being connected by the connecting plate, the adjacent rib plates can be formed into a substantially U-shape as a whole.

Since the concern about the collapse of the ribs during welding is eliminated by virtue of the connecting plates, devices such as rib holding jigs can be omitted. In addition, the connecting plates are formed by bending, and the height of corner portions which are generated in the connecting plate when it is bent becomes uneven. Therefore, a configuration can also be adopted in which the height at the corner portions is made lower than that of the other portions of the rib plate, so that the corner portions cannot be brought into contact with the inner surfaces of the pressure vessel.
Incidentally, in the event that the rib plates are provided in such a manner as to extend in its longitudinal direction along the full length of the pressure vessel, when a hydrogen absorbing alloy is stored therein, ventilation properties are disturbed. Therefore, the rib plates are desirably provided in such a manner as to leave spaces at end portions in the longitudinal direction thereof.

### Advantage of the Invention

As has been described heretofore, according to the pressure vessel fabricating method of the invention, since the rib plates are provided in the interior of the box-shaped pressure vessel and the rib plates are joined to the inner surface of the wall of the pressure vessel in such a state that the rib plates are kept erected by welding applied from the outside of the wall of the pressure vessel, even in the miniaturized thin pressure vessel, the pressure resisting strength of the pressure vessel can be increased by the rib plates being provided in the interior thereof, and in the case of the pressure vessel being used as a hydrogen absorbing alloy storage vessel, a superior strength is exhibited against the alloy expansion. Further, since the fabrication of the vessel is simplified, mass production becomes possible.
In addition, the internal volume of the pressure vessel can be increased by making thinner the thickness of the vessel and optimizing the shape of the ribs, and this also becomes advantageous in increasing the volume efficiency as the hydrogen storage vessel.

### Brief Description of the Drawings

[Fig. 1] Diagrams showing a pressure vessel fabrication process according to an embodiment of the invention, diagrams being an exploded perspective view of a pressure vessel, a sectional plan view of the same and a side sectional view of the same.
[Fig. 2] Perspective views showing a pressure vessel obtained by the embodiment and the pressure vessel in use.
[Fig. 3] Diagrams showing modified examples of rib plates according to the invention.
[Fig. 4] Diagrams showing further modified examples of rib plates according to the invention.

### Description of Reference Numerals

- 1: vessel main body
- 2: rib plate
- 10: pressure vessel
- 11: welding line
- 20: rib plate
- 20a: communication cut-out
- 21: rib plate
- 30: rib plate
- 30a: connecting plate

### Best Mode for Carrying out the Invention

Hereinafter, an embodiment of the invention will be described based on the accompanying drawings.
A vessel main body 1 having a flat rectangular shape is formed of a material such as a tin plate material, a stainless steel material, an aluminum material or the like through deep drawing, and a plurality of rib plates 2 ... 2 are prepared whose height is made to match an internal height of the vessel main body 1. The rib plates 2 are formed shorter than the overall length of the vessel main body 1.
These rib plates 2 are provided at equal intervals in an interior of the vessel main body 1, and the rib plates 2 are also provided in such a manner that both ends of the respective rib plates are spaced substantially the same distance away from both ends of the vessel main body 1.

A pressure is applied to the vessel main body 1 in which the rib plates 2 are provided in the above-described way from above and below so that the rib plates 2 are attached closely to inner surfaces of walls of the vessel main body 1 at upper and lower ends thereof. Resistance welding is applied to the vessel main body 1 so that the inner surfaces of the vessel main body 1 and the plurality of rib plates are joined together. In addition, laser beam welding may be adopted in place of the resistance welding. The rib plates may be joined to the vessel main body 1 at upper and lower surfaces thereof at one time or may be so joined one by one at one of the upper and lower surfaces thereof. Alternatively, the plurality of rib plates may be joined to the vessel main body 1 at one or both of the upper and lower surfaces thereof at one time using a plurality of welding machines.

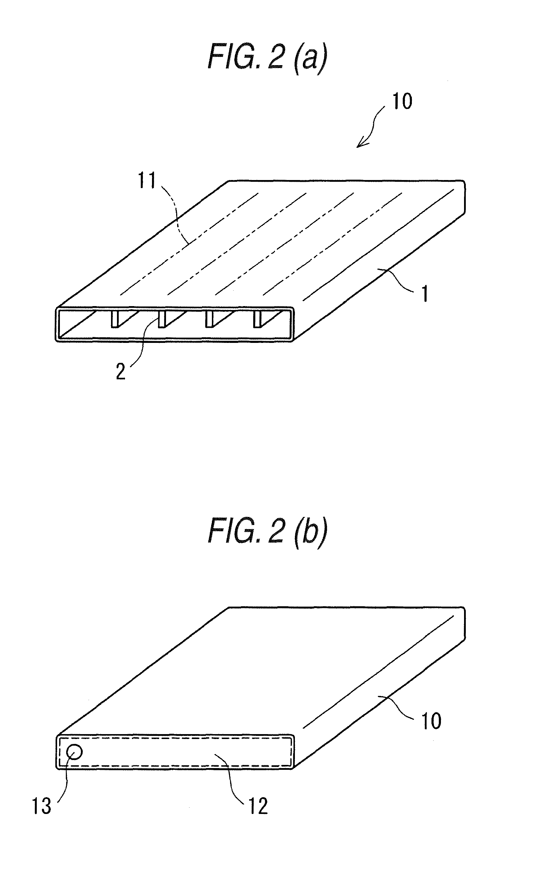

By the vessel main body 1 to which the rib plates 2 are joined being welded from the outside so that the rib plates 2 are welded thereto, a pressure vessel 10 shown in Fig. 2 can be obtained. Imaginary lines in the figure denote welding lines 11, which exist along the rib plates 2. When the pressure vessel 10 is used as a hydrogen absorbing alloy vessel, the pressure vessel 10 stores hydrogen absorbing alloy powder (not shown) in an interior thereof, and a lid 12 is placed to cover an open end of the vessel main body 1 and is thereafter fixed in place by welding. A gas outlet/inlet port 13 is provided in the lid 12 so as to enable outward and inward movements of a hydrogen gas.
In the pressure vessel 10, although the hydrogen absorbing alloy stored in the interior thereof expands when the alloy absorbs hydrogen introduced through the gas outlet/inlet port 13, a superior pressure resisting strength can be exhibited against the alloy expansion.

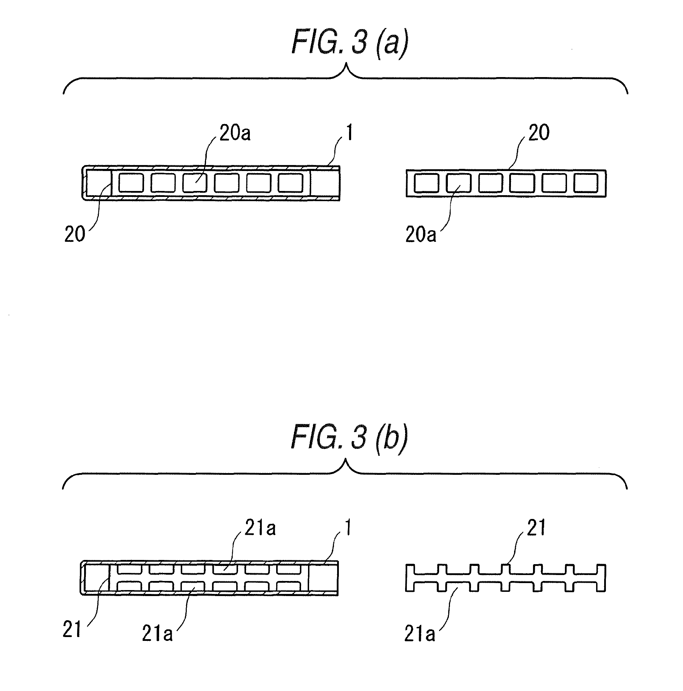

In addition, in order to increase ventilation properties of the rib plates between both the sides thereof, communication cut-outs can be provided through internal cutting-out or external cutting-out. Fig. 3 (a) shows a rib plate 20 in which communication cut-outs 20a are provided through internal cutting-out. Communication cut-outs 20a are formed in a longitudinal direction of the rib plate at equal intervals. The pressure resisting strength of the vessel main body 1 can be increased by pillar portions remaining between the communication cut-outs 20a.
Additionally, Fig. 3(b) shows a rib plate 21 in which communication cut-outs 21a are provided through external cutting-out. Communication cut-outs 21a are formed in a longitudinal direction of the rib plate at equal intervals. The pressure resisting strength of the vessel main body 1 can be increased by pillar portions remaining between the communication cut-outs 21a. Incidentally, communication cut-outs formed through internal cutting-out and communication cut-outs formed through external cutting-out may be formed in a mixed fashion.

Further, a connecting plate can be provided between the adjacent rib plates so that the rib plates do not collapse but can maintain their standing postures even though a pressure is applied to the vessel main body at the time of welding.

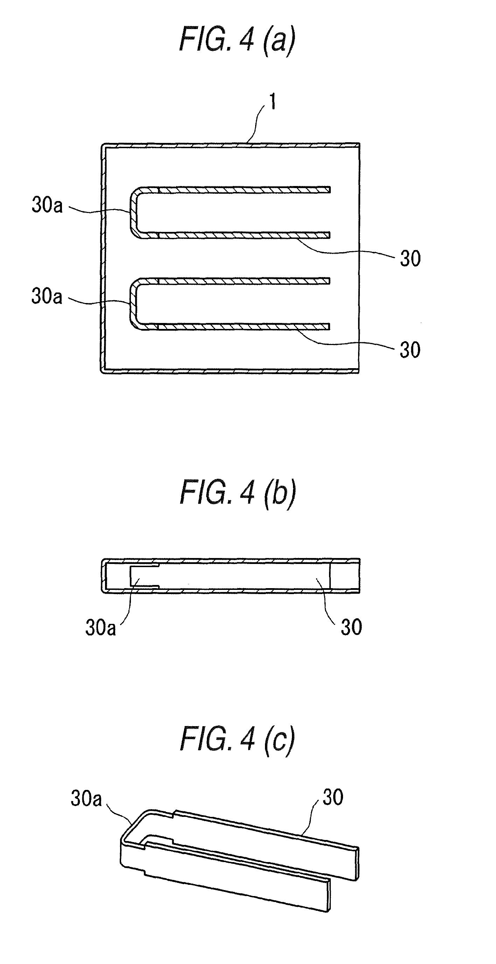

In Fig. 4, there are used rib plates 30, 30 having a U-shape as a whole by fixing a connecting plate 30a to one ends of the rib plates 30, 30. Incidentally, the connecting plate 30a is made shorter in height than the rib plates 30, 30, so that the connecting plate 30a is formed in such a manner as not to contact the inner surface of the vessel main body 1 on at least one side thereof. This is because, as has been described before, if the rib plate is worked into the U-shape, a corner portion thereof becomes taller in height than the remaining portions thereof. Thus, the connecting plate 30a is formed into a shape in which any protrusion resulting from bending can be ignored.

The rib plates 30 are also joined to the inner surfaces of the vessel main body 1 by resistance welding or laser beam welding. As this occurs, the connecting plate 30a is not joined to the inner surface of the vessel main body 1.
The rib plates 30 do not collapse but can maintain their stable postures even when a pressure is applied to the vessel main body 1 at the time of welding, whereby welding can be implemented properly in such a state that a sufficient pressure is applied to the vessel main body 1. As a result, the close attachment properties of the rib plates to the inner surfaces of the pressure vessel can be increased, thereby making it possible to increase the weldability between the pressure vessel and the rib plates.

### Example 1

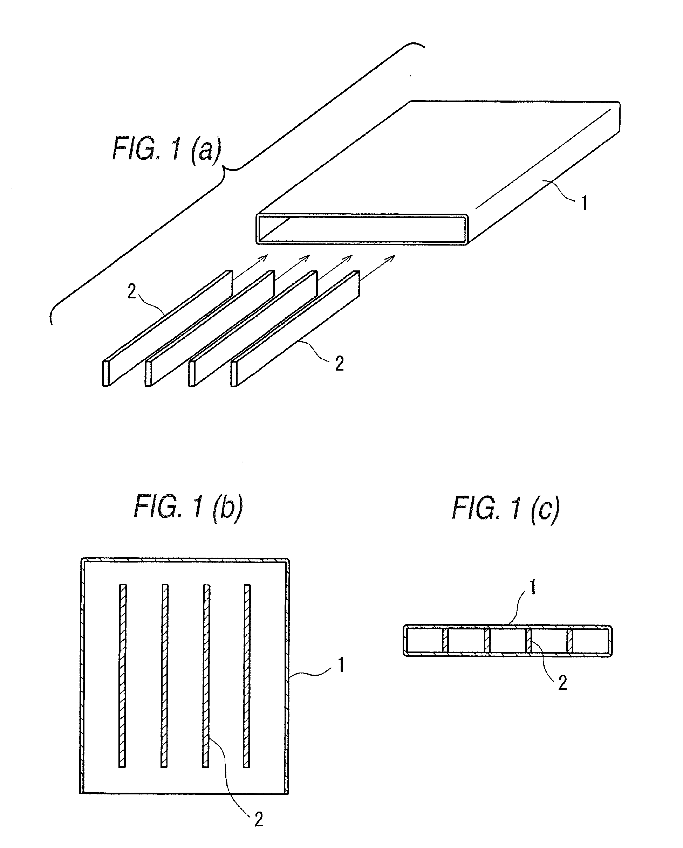

Hereinafter, an example of the invention will be described.
A rectangular vessel (40 x 45 x 5.8 mm) was prepared by deep drawing a tin plate whose thickness is 0.6 mm, as with the pressure vessel shown in Fig. 1, four ribs were provided in an interior of the rectangular vessel so prepared, upper and lower surfaces of the vessel were held by electrodes therebetween, a load was exerted in such a manner that inner surfaces of the vessel and the rib plates could closely be attached to each other, and thereafter, the rib plates were joined to the inner surfaces of the vessel by condenser welding applied from the outside of the vessel. In this welding, by applying a voltage and a current between the electrodes, closely attaching portions between portions on the inner surfaces of the walls the vessel where the electrodes were applied and rib plates were fused momentarily, so that the inner surfaces and the rib plates were joined together completely. According thereto, the pressure resisting strength of the rectangular vessel became 6 MPa. A hydrogen absorbing alloy was filled in the interior of the rectangular vessel to which the rib plates were joined, and thereafter, a lid plate was welded to the rectangular vessel, whereby the rectangular vessel was made into a hydrogen storage vessel. The vessel withstood sufficiently an alloy expansion resulting from absorption of hydrogen by the hydrogen absorbing alloy. Further, the vessel was not broke even when the vessel, which was fulfilled by the hydrogen, was heated to 55°C, and an internal pressure of the vessel exceeded 5 MPa.

In addition, the thickness of the rib plates was referred to as 1 mm, and the rib plates were worked to be cut out internally or externally. Herein, a tensile strength of 6 MPa was secured for the rib plate, and a sectional area equal to 30% or more of the thickness of the rib plate, which was 1 mm, was secured to withstand or resist the pressure. By the rib plates being worked through internal cutting-out or external cutting-out, the occupied volume by the ribs could be reduced by 50%, whereby the internal volume of the vessel could be increased.

While the invention has been described in detail and by reference to the specific embodiment, it is obvious to those skilled in the art to which the invention pertains that various alterations and modifications can be made thereto without departing from the spirit and scope of the invention.
Incidentally, this application is based upon the Japanese patent application (No. 2007-041749) filed February 22, 2007, and the contents thereof are incorporated herein in its entirety by reference.

### INDUSTRIAL APPLICABILITY

The rib plates 2 are provided in the interior of the box-shaped pressure vessel (the vessel main body 1) , and the rib plates 2 are joined to the inner surfaces of the walls of the pressure vessel in such a state that the rib plates are kept erected by welding being applied to the walls of the pressure vessel from the outside thereof. As the welding method, resistance welding involving less thermal effect or laser beam welding is desired. Even in the miniaturized thin pressure vessel, the pressure resisting strength of the pressure vessel can be increased by the rib plates being fixedly provided in the interior thereof, and also in the case of the pressure vessel being used as a hydrogen absorbing alloy vessel, a superior strength is exhibited against an alloy expansion. Since the fabrication of the vessel becomes simple, mass production becomes possible. The internal volume of the vessel can be increased by making the thickness of the vessel thinner and optimizing the shape of the ribs, thereby making it possible to increase the volume efficiency as the hydrogen storage vessel.

## Claims

1. A pressure vessel fabricating method,
wherein rib plates are provided in an interior of a box-shaped pressure vessel, and the rib plates are joined to an inner surface of a wall of the pressure vessel in such a state that the rib plates are kept erected through welding to the wall of the pressure vessel from an outside of the wall of the pressure vessel.

2. The pressure vessel fabricating method according to claim 1,
wherein the rib plates are provided in such a manner as to extend between inner surfaces of walls of the pressure vessel that are opposed to each other, and both ends of the rib plates are respectively welded to the inner surfaces of the walls.

3. The pressure vessel fabricating method according to claim 1 or 2,
wherein the rib plates include communication cut-outs that are communicated with both sides of the rib plates.

4. The pressure vessel fabricating method according to any one of claims 1 to 3,
wherein a part or all of the rib plates include connecting plates which extend between adjacent rib plates so as to fix the adjacent rib plates to each other.

5. The pressure vessel fabricating method according to any one of claims 1 to 4,
wherein the welding is resistance welding or laser beam welding.

6. The pressure vessel fabricating method according to any one of claims 1 to 5,
wherein the pressure vessel is a hydrogen absorbing alloy vessel that stores a hydrogen absorbing alloy.

7. The pressure vessel fabricating method according to any one of claims 1 to 6,
wherein the rib plates are provided to extend in a plate-length direction with leaving spaces from the pressure vessel by being not to extend along a full length of the pressure vessel.
